(19) Europäisches Patentamt
European Patent Office
Office européen des brevets

(11) EP 1 329 805 A2

(12) **EUROPÄISCHE PATENTANMELDUNG**

(43) Veröffentlichungstag:
**23.07.2003 Patentblatt 2003/30**

(51) Int Cl.7: **G06F 9/312**, G06F 7/00

(21) Anmeldenummer: **03000523.5**

(22) Anmeldetag: **09.01.2003**

(84) Benannte Vertragsstaaten:
**AT BE BG CH CY CZ DE DK EE ES FI FR GB GR HU IE IT LI LU MC NL PT SE SI SK TR**
Benannte Erstreckungsstaaten:
**AL LT LV MK RO**

(30) Priorität: **18.01.2002 DE 10202032**

(71) Anmelder: **Giesecke & Devrient GmbH**
**81677 München (DE)**

(72) Erfinder: **Wallhäusser, Curd**
**80995 München (DE)**

(54) **Laden und Interpretieren von Daten**

(57) Bei einem Verfahren zum Laden von Daten (30) in einen Speicher eines tragbaren Datenträgers weist der tragbare Datenträger einen Prozessorkern auf, der dazu eingerichtet ist, in einer vorgegebenen, nativen Wortordnung auf Datenwörter von Mehrwort-Datenstrukturen (34, 36) im Speicher zuzugreifen (38, 40). Die Daten (30) werden unter Beibehaltung ihrer Reihenfolge aufsteigend bzw. absteigend in den Speicher geschrieben werden, so daß die Wortordnung der im Speicher abgelegten Mehrwort-Datenstrukturen (34, 36) mit der nativen Wortordnung des Prozessorkerns (14) übereinstimmt. Bei einem Verfahren zum Interpretieren von Daten (32), die in dem Speicher des tragbaren Datenträgers vorliegen, unterscheidet sich die Adresse jedes Instruktionscodes von jeder Basisadresse (42, 44), die zum Zugriff auf eine als Parameter des Instruktionscodes dienende Mehrwort-Datenstruktur (34, 36) verwendet wird, um mehr als die Wortanzahl des Instruktionscodes. Ein computerlesbarer Datenträger und ein tragbarer Datenträger weisen entsprechende Merkmale auf. Die Erfindung stellt eine Technik bereit, durch die sich Daten mit einer vorgegebenen Wortordnung effizient in tragbare Datenträger, die eine andere Wortordnung voraussetzen, laden bzw. auf den Datenträgern interpretieren lassen.

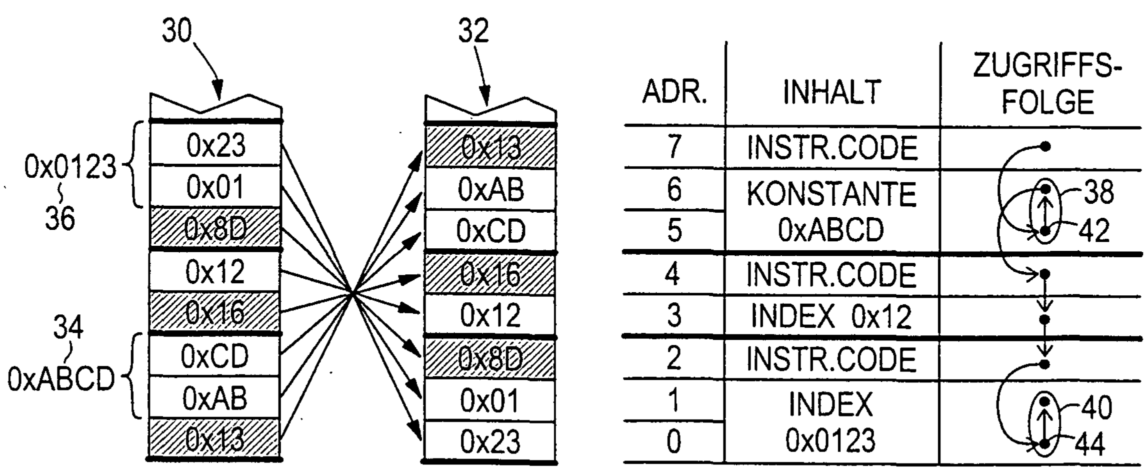


Fig. 4

EP 1 329 805 A2

Printed by Jouve, 75001 PARIS (FR)

## Beschreibung

Die Erfindung betrifft allgemein das Laden von Daten in einen Speicher eines tragbaren Datenträgers sowie das Interpretieren von Daten, die in dem Speicher des tragbaren Datenträgers vorhanden sind, durch einen von einem Prozessorkern des tragbaren Datenträgers ausgeführten Interpreter. Spezieller betrifft die Erfindung das Laden und Interpretieren von Daten, die Mehrwort-Datenstrukturen mit einer vorgegebenen Wortordnung enthalten. Ein in Zusammenhang mit der Erfindung eingesetzter tragbarer Datenträger kann insbesondere eine Chipkarte in unterschiedlichen Bauformen oder ein Chipmodul sein.

Die möglichen Wortordnungen von Mehrwort-Datenstrukturen sind unter den Bezeichnungen *big endian* und *little endian* bekannt. Unter einer *big-endian*-Wortordnung wird eine Wortordnung verstanden, bei der das Wort mit dem höchstwertigen Bit (MSB = *most significant bit*) im Speicher an der niedrigsten Adresse der Mehrwort-Datenstruktur abgelegt ist bzw. bei einem Datenstrom zuerst übertragen wird. Entsprechend wird unter einer *little-endian*-Wortordnung eine Wortordnung verstanden, bei der das Wort mit dem geringstwertigen Bit (LSB = *least significant bit*) im Speicher an der niedrigsten Adresse der Mehrwort-Datenstruktur abgelegt ist bzw. bei einem Datenstrom zuerst übertragen wird. Als "Wort" soll hier ein Bitfeld verstanden werden, dessen Breite der Verarbeitungsbreite des Prozessorkerns und des Speichers entspricht. Bei einem tragbaren Datenträger mit 8 Bit Verarbeitungsbreite ist daher ein Wort gleich einem Byte.

Der native Lese- oder Schreibzugriff auf Mehrwort-Datenstrukturen durch den Prozessorkern des tragbaren Datenträgers setzt voraus, daß die Daten im Speicher eine durch die Hardware oder Mikroprogrammierung des Prozessorkerns vorgegebene Wortordnung aufweisen. Ist dies nicht der Fall, also wenn beispielsweise der Prozessorkern eine *little-endian*-Wortordnung erwartet und die Mehrwort-Datenstrukturen in *big-endian*-Wortordnung gespeichert sind, können die nativen Prozessorfunktionen nicht benutzt werden. Der Lese- oder Schreibzugriff muß dann in mehreren Einzelschritten erfolgen, bei denen getrennt auf die einzelnen Speicherworte der Mehrwort-Datenstruktur zugegriffen wird und bei denen Verschiebe- und Verknüpfungsoperationen ausgeführt werden. Verglichen mit der nativen Zugriffsoperation sind diese Einzelschritte sehr ineffizient.

Ein zumindest firmeninterner Stand der Technik der Anmelderin betrifft das Laden von Daten im *Java-Card*-CAP-Format (CAP = *converted applet*) in eine Chipkarte, deren Prozessorkern eine *little-endian*-Wortordnung voraussetzt. Das CAP-Format ist in Kapitel 6 des Dokuments "*Java Card*™ 2.2.1 *Virtual Machine Specification*", Revision 1.0 vom 18. Mai 2000, verfügbar unter *http://java.sun.com/products/javacard*, genau beschrieben. CAP-Daten sind eine Folge von 8-Bit-Worten, die Instruktionscodes und Datenwerte mit 8 Bit Breite und Mehrwort-Datenstrukturen mit 16 oder 32 Bit aufweisen. Alle Mehrwort-Datenstrukturen liegen in den CAP-Daten in *big-endian*-Wortordnung vor.

Gemäß dem genannten Verfahren wird beim Laden der Daten in die Chipkarte analysiert, welche Datenwörter zu Mehrwort-Datenstrukturen gehören. Die Datenwörter jeder Mehrwort-Datenstruktur werden dann in umgekehrter Reihenfolge in den Speicher der Chipkarte geschrieben. Das Verfahren ermöglicht eine effiziente Programmausführung; es ist jedoch zur Ladezeit sehr rechenaufwending und erfordert viele einzelne Schreibvorgänge in den Speicher der Chipkarte, die bei einem Speicher in EEPROM-Technologie nur langsam ablaufen und den Speicher belasten.

In der allgemeinen Computertechnik sind bereits Verfahren und Schaltungen bekannt, um Probleme bei der Auswertung von *big-endian*-Daten durch *little-endian*-Systeme und umgekehrt zu vermeiden. Beispiele für solche Techniken finden sich in den US-Patenten 6 279126, 5 968 164,5 918 075, 5 907 865,5 867 690, 5 828 884, 5 687 337,5 630 084 und 5 398 328. Die dort beschriebenen Lösungen setzen aber in der Regel spezielle Hardware voraus, die aufwendige Entwicklungsarbeiten erfordert und wenig flexibel ist. Überdies besteht bei einigen der bekannten Techniken eine Beschränkung hinsichtlich der zulässigen Ausrichtung (*alignment*) der Mehrwort-Datenstrukturen an Adressen, die glatte Vielfache von 2 oder 4 sind. Andere Verfahren erfordern dagegen eine aufwendige Interpretation der Daten zur Ladezeit.

Einige bekannte Schaltungen basieren auf Prozessoren, die beide Wortordnungen "beherrschen". So beschreibt DE 43 12 250 A1 ein Computersystem, das sowohl die Verarbeitung von *big-endian* wie auch von *little-endian*-Wortordnungen erlaubt. Das System umfaßt einen geeigneten Prozessor, der beide Wortordnungen verarbeiten kann. Im Rahmen eines in Phasen geteilten boot-Ablaufes wird der Prozessor durch softwaregesteuerte Änderungen in der Firmware jeweils auf eine geeignete Wortordnung eingestellt.

US 5,848,43 offenbart ein effektives Speicherverwaltungssystem für einen Prozessor, der einerseits unter Verwendung der *big-endian*-Wortordnung, andererseits unter Verwendung einer sogenannten modifizierten *little-endian*-Wortordnung betrieben werden kann. Um sicherzustellen, daß der Aufruf von gespeicherten Daten nicht zu Wartezeiten führt, weil der Aufruf nicht der vom Prozessor verwendeten Wortordnung entspricht, werden die Adressen der zu speichernden Daten unter Verwendung bestimmter Bitmuster verändert.

Die Erfindung hat die Aufgabe, eine Technik bereitzustellen, durch die sich Daten mit einer vorgegebenen Wortordnung effizient in tragbare Datenträger, die eine andere Wortordnung voraussetzen, laden bzw. auf den Datenträger interpretieren lassen.

Die Erfindung hat die Aufgabe, die genannten Probleme zumindest zum Teil zu vermeiden und eine Technik bereitzustellen, durch die sich Daten mit einer vorgegebenen Wortordnung effizient in tragbare Datenträger, die eine andere Wortordnung voraussetzen, laden bzw. auf den Datenträgern interpretieren lassen. Vorzugsweise soll hierfür keine zusätzliche Hardware benötigt werden, und die Daten sollen keinen Beschränkungen hinsichtlich der Ausrichtung der Mehrwort-Datenstrukturen unterliegen.

Erfindungsgemäß wird diese Aufgabe durch Verfahren mit den Merkmalen des Anspruchs 1 bzw. des Anspruchs 4, einen computerlesbaren Datenträger mit den Merkmalen des Anspruchs 10 sowie einen tragbaren Datenträger mit den Merkmalen des Anspruchs 11 gelöst. Die abhängigen Ansprüche definieren bevorzugte Ausgestaltungen der Erfindung.

Die Erfindung geht hinsichtlich des Ladevorgangs von der Grundidee aus, die Daten ohne Veränderung ihrer relativen Reihenfolge in Richtung fallender bzw. steigender Adressen in den Speicher zu schreiben, so daß die Wortordnung der gespeicherten Daten mit der nativen Wortordnung des Prozessorkerns übereinstimmt. Die Daten werden also beim Laden als ganzer Speicherbereich "umgekehrt" abgelegt. In vielen Ausgestaltungen bedeutet dies, daß die Daten anfangend bei hohen Speicheradressen hin zu niedrigen Adressen in den Speicher geschrieben werden.

Die Erfindung ermöglicht das Laden der Daten in den Speicher ohne oder mit nur geringem Zusatzaufwand. Insbesondere brauchen die Daten nicht auf das Vorhandensein von Mehrwort-Datenstrukturen analysiert zu werden, was die Rechenzeit und auch den Speicherbedarf während des Ladevorgangs verringert. Überdies ist die Anzahl der Speicherzugriffe minimal. In vielen Ausgestaltungen können blockweise Speicheroperationen verwendet werden, die deutlich effizienter als Einzelzugriffe sind.

Hinsichtlich der Interpretation der im Speicher befindlichen Daten geht die Erfindung von der Grundidee aus, die Basisadresse für den Zugriff auf eine als Parameter eines Instruktionscodes dienende Mehrwort-Datenstruktur so zu wählen, daß eine native Prozessorfunktion zum Zugriff auf die Mehrwort-Datenstrukturen verwendet werden kann. Dabei unterscheidet sich die Basisadresse um mehr als die Wortanzahl des Instruktionscodes von der Adresse des Instruktionscodes. Dieses Merkmal steht im Gegensatz zu der im Stand der Technik üblichen Vorgehensweise, bei der nach der Auswertung eines beispielsweise ein Speicherwort umfassenden Instruktionscodes eine die unmittelbar an den Instruktionscode anschließende Basisadresse zum Zugriff auf den ersten Parameter der Instruktion dient.

Durch die Erfindung lassen sich die "rückwärts" im Speicher befindlichen Daten ohne oder allenfalls mit geringfügigen Effizienzeinbußen interpretieren. Der eigentliche Zugriff auf die Mehrwort-Datenstrukturen erfolgt mit der vollen Geschwindigkeit der nativen Prozessorfunktionen, ohne daß zusätzlicher Programmcode im Interpreter erforderlich wäre. Allenfalls für die erforderlichen Schritte zur Anpassung der Basisadressen ist in manchen Ausgestaltungen zusätzlicher Rechenaufwand erforderlich, der jedoch im Vergleich mit den Einsparungen nicht ins Gewicht fällt.

Insgesamt basiert die Erfindung wesentlich auf der Erkenntnis, daß der kontraintuitive Schritt des Ladens der Daten in der "verkehrten" Reihenfolge nicht nur unschädlich ist, sondern erhebliche Vorteile mit sich bringt. Insbesondere ist es ein überraschendes Ergebnis, daß sich die "verkehrt" gespeicherten Daten äußerst effizient interpretieren lassen.

In bevorzugten Ausgestaltungen der Erfindung ist die native Wortordnung des Prozessorkerns eine *little-endian*-Wortordnung, und die Wortordnung der Mehrwort-Datenstrukturen in den zu ladenden Daten ist eine *big-endian*-Wortordnung. Die erfindungsgemäß in "umgekehrter" Richtung in den Speicher geschriebenen Daten weisen dann eine *little-endian*-Wortordnung auf. Vorzugsweise erfolgt der Schreibvorgang in der Richtung von hohen zu niedrigen Adressen. Die vorgesehene Richtung des Programmflusses von Instruktionscode zu Instruktionscode, wenn Sprungbefehle nicht berücksichtigt werden, läuft vorzugsweise ebenfalls von hohen zu niedrigen Adressen. In anderen Ausgestaltungen der Erfindung sind die hier genannten Anordnungen jedoch gerade umgekehrt.

Besonders bevorzugt wird die Erfindung bei tragbaren Datenträgern eingesetzt, die die Funktionalität einer *Java Card*™ aufweisen. Der vom Prozessorkern ausgeführte Interpreter ist dann vorzugsweise eine *Java Card Virtual Machine*. Die in den Datenträger zu ladenden Daten liegen vorzugsweise im *Java-Card*-CAP-Format vor.

Der computerlesbare Datenträger weist erfindungsgemäß Programmbefehle auf, um das erfindungsgemäße Verfahren zu implementieren. Ein derartiger Datenträger kann beispielsweise ein Halbleiterspeicher oder eine Diskette oder eine CD-ROM oder ein Band sein, auf denen ein Interpreter und/oder ein Ladeprogramm zur Verwendung in erfindungsgemäßen Chipkarten gespeichert ist. Insbesondere kann ein derartiger Datenträger zur Verwendung bei der Herstellung von Chipkarten vorgesehen sein.

In bevorzugten Ausgestaltungen sind der computerlesbare Datenträger und/oder der tragbare Datenträger mit Merkmalen weitergebildet, die den oben beschriebenen und/oder in den abhängigen Verfahrensansprüchen genannten Merkmalen entsprechen.

Weitere Merkmale, Vorteile und Aufgaben der Erfindung gehen aus der folgenden genauen Beschreibung eines Ausführungsbeispiels und mehrerer Ausführungsalternativen hervor. Es wird auf die schematischen Zeichnungen verwiesen, in denen zeigen:

Fig. 1 ein Blockdiagramm mit Funktionseinheiten eines tragbaren Datenträgers sowie in den Datenträger zu ladenden Daten,

Fig. 2 und Fig. 3 je eine beispielhafte Darstellung der zu ladenden und der in den Speicher eingeschriebenen Daten nach dem Stand der Technik, und

Fig. 4 eine beispielhafte Darstellung der zu ladenden und der in den Speicher eingeschriebenen Daten in einem Ausführungsbeispiel der Erfindung.

Der in Fig. 1 dargestellte tragbare Datenträger 10 ist im vorliegenden Ausführungsbeispiel als Chipkarte ausgebildet. Er weist eine Schnittstelle 12 zum kontaktlosen oder kontaktgebundenen Datenaustausch mit der Umgebung, einen Prozessorkern 14 und einen Speicher 16 auf. Der Prozessorkern 14, der Speicher 16 und Teile der Schnittstelle 12 sind auf einem einzigen, in Fig. 1 nicht gesondert dargestellten, Halbleiterchip integriert. Der Prozessorkern 14 hat im vorliegenden Ausführungsbeispiel eine Wortbreite von 8 Bit (=1 Byte) und weist als native Wortordnung eine *little-endian*-Wortordnung auf.

Der Speicher 16 weist mehrere Bereiche auf, die in unterschiedlichen Speichertechnologien ausgestaltet sind. Bei dem Ausführungsbeispiel von Fig. 1 sind dies ein beispielsweise als maskenprogrammiertes ROM ausgestalteter Nur-Lese-Speicher 18, ein in EEPROM-Technologie ausgestalteter nichtflüchtiger Schreib-/Lese-Speicher 20 und ein als RAM ausgestalteter flüchtiger Schreib-/Lese-Speicher 22. In dem Nur-Lese-Speicher 18 befinden sich insbesondere ein Betriebssystem 24, ein Ladeprogramm 26 und ein Interpreter 28.

Das Betriebssystem 24 stellt in an sich bekannter Weise grundlegende Funktionen für den Betrieb des tragbaren Datenträgers 10 bereit. Der Interpreter 28 implementiert im vorliegenden Ausführungsbeispiel eine *Java Card Virtual Machine,* die gemäß dem bereits genannten Dokument *"Java Card*™ 2.2.1 *Virtual Machine Specification*", Revision 1.0 vom 18. Mai 2000, verfügbar unter *http://java.sun.com/products/javacard,* ausgestaltet ist. Das Ladeprogramm 26 dient dazu, Daten 30 in den Speicher 16 zu laden. Die als Ergebnis des Ladevorgangs in den nichtflüchtigen Schreib-/Lese-Speicher 20 eingeschriebenen Daten sind in den Figuren mit dem Bezugszeichen 32 versehen. Im hier beschriebenen Ausführungsbeispiel liegen die Daten 30 im eingangs bereits erwähnten *Java-Card*-CAP-Format vor. In Ausführungsalternativen können die Daten 30 dagegen andere strukturierte und/oder interpretierbare Datenformate aufweisen.

Einige Details der Struktur der zu ladenden Daten 30 sind in Fig. 2 bis Fig. 4 veranschaulicht. Die Daten 30 sind eine Folge von Bytes, durch die Instruktionen eines *Java-Card-Applets* codiert werden. Jede Instruktion weist ein Byte als Instruktionscode und optional einen oder mehrere Parameter auf. Die Parameter können einzelne Bytes oder Zwei-Wort-Datenstrukturen mit zwei Bytes (Datentyp *short*) oder Vier-Wort-Datenstrukturen mit vier Bytes (Datentyp *integer*) sein. Sämtliche Mehrwort-Datenstrukturen in den zu ladenden Daten 30 weisen die *big-endian*-Wortordnung auf.

In Fig. 2 bis Fig. 4 sind die Grenzen zwischen den Instruktionen durch dicke Linien markiert, und die Instruktionscodes sind schraffiert unterlegt. Das erste Byte der zu ladenden Daten 30 ist in Fig. 2 bis Fig. 4 unten gezeigt. Dieses Byte bezeichnet als erster Instruktionscode 0x13 den Befehl *sipush*. Der Befehl *sipush* bewirkt, daß die 2-Byte-Konstante 0xABCD, die durch die als Parameter folgende Mehrwort-Datenstruktur 34 angegeben ist, in einen Stapelspeicher geschrieben wird. In der zweiten Instruktion bezeichnet der Instruktionscode 0x16 den Befehl *sload*, und der 1-Byte Parameter 0x12 gibt einen lokalen Variablenindex dazu an. Der Instruktionscode 0x8D in der dritten Instruktion ruft eine Methode auf (Befehl *invokestatic*). Hierbei gibt die Mehrwort-Datenstruktur 36 als Parameter den Indexwert 0x0123 an. Dieser Indexwert verweist auf einen Eintrag in einem Konstantenpool, der seinerseits die aufzurufende Methode referenziert.

In dem bekannten Verfahren gemäß Fig. 2 werden die Daten 30 unter Beibehaltung ihrer Reihenfolge in aufsteigender Ordnung in den Speicher 16 geladen; der Ladevorgang ist durch Pfeile symbolisiert. Als Ergebnis dieses Ladevorgangs befindet sich beispielsweise der erste Instruktionscode 0x13 an der Speicheradresse 0 relativ zu einer Startadresse des hier betrachteten Speicherbereichs, das höherwertige Byte 0xAB der Mehrwort-Datenstruktur 34 an der Speicheradresse 1, das geringerwertige Byte 0xCD der Mehrwort-Datenstruktur 34 an der Speicheradresse 2, und so weiter.

Bei der Interpretation der so in den Speicher 16 geladenen Daten führt der Prozessorkern 14 eine Zugriffsfolge aus, die in der rechten Tabellenspalte von Fig. 2 angedeutet ist. Da z.B. die Mehrwort-Datenstruktur 34 im Speicher 16 in der *big-endian*-Wortordnung und nicht in der nativen *little-endian*-Wortordnung des Prozessorkerns 14 vorliegt, können effiziente maschinensprachliche Befehle des Prozessorkerns 14 zum Zugriff auf eine 16-Bit-Zahl nicht verwendet werden. Der Prozessorkern 14 muß vielmehr getrennt auf die Bytes an den Speicheradressen 1 und 2 zugreifen und die eingelesenen Bytewerte dann durch Schiebe- und Verknüpfungsoperationen zu der 16-Bit-Zahl kombinieren. Die erforderlichen Operationen lassen sich in einer der Programmiersprache C ähnlichen Notation z.B. wie folgt ausdrücken:

```
value = (data[1] <<8 | data[2])
```

Das in Fig. 3 veranschaulichte Lade- und Interpretationsverfahren vermeidet den erheblichen Zusatzaufwand, der bei dem Verfahren von Fig. 2 zur Datenformatumwandlung während der Interpretationszeit erforderlich ist. Bei dem Verfahren gemäß Fig. 3 wird zur Ladezeit die Struktur der Daten 30 analysiert, um die Mehrwort-Datenstrukturen 34 und 36 zu identifizieren. Die Bytes dieser Mehrwort-Datenstrukturen 34 und 36 werden dann beim Ladevorgang vertauscht, so daß die in den Speicher 16 an den Adressen 1 und 2 bzw. 6 und 7 geschriebenen Daten 32 die *little-endian*-Wortordnung aufweisen.

Die Mehrwort-Datenstrukturen 34 und 36 der im Speicher 16 vorliegenden Daten 32 können dann zur Interpretationszeit durch native Befehle des Prozessorkerns 14 gelesen werden. Diese Befehle sind in der rechten Spalte von Fig. 3 durch Ovale angedeutet und mit den Bezugszeichen 38 bzw. 40 versehen. Jeder native Mehrwortbefehl 38, 40 geht von einer Basisadresse 42, 44 aus, die das erste gelesene Speicherwort angibt. Durch den Prozessorkern 14 ist vorgegeben, daß jeweils die Adresse des geringstwertigen Wortes der Mehrwort-Datenstruktur 34, 36 als Basisadresse 42, 44 dient. Beispielsweise läßt sich der Mehrwortbefehl 38 durch die folgende Notation ausdrücken; die Basisadresse 42 ist hierbei die Adresse 1:

```
value = *((unsigned int*) (data+1))
```

Das Verfahren gemäß Fig. 3 weist eine hohe Geschwindigkeit zur Interpretationszeit auf. Die beim Ladevorgang notwendige Analyse der Daten 30 ist jedoch rechenaufwendig. Auch die vielen einzelnen Schreibvorgänge in den EEPROM-Speicher 20 erfordern beträchtliche Zeit und stellen eine Belastung für den EEPROM-Speicher 20 dar.

Fig. 4 zeigt an dem gegebenen Ausführungsbeispiel den Einsatz des erfindungsgemäßen Lade- und Interpretationsverfahren. Das Laden der Daten 30 wird vom Ladeprogramm 26 gesteuert. Die Daten 30 werden hierbei ohne Veränderung ihrer relativen Reihenfolge in Richtung absteigender Adressen in den Speicher 16 geschrieben. Dabei können effiziente Operationen zum blockweisen Beschreiben des Speichers 16 eingesetzt werden. Die in den Speicher 16 geladenen Daten 32 sind gegenüber den Ursprungsdaten 30 insgesamt vertauscht. Beispielsweise sind in den Daten 32 die Instruktionscodes an den Adressen 7,4 und 2 angeordnet und weisen damit höhere Adressen als die jeweils zugeordneten Parameter auf. Die Mehrwort-Datenstrukturen 34, 36 liegen als Ergebnis des Ladevorgangs in der *little-endian*-Wortordnung im Speicher 16 vor.

Bei der von dem Interpreter 28 durchgeführten Interpretation der im Speicher 16 befindlichen Daten 32 wird die Adreßumkehr während des Ladevorgangs berücksichtigt. Die einzelnen Instruktionen werden daher in Richtung fallender Speicheradressen ausgeführt. Dies betrifft sowohl den Übergang von einem Instruktionscode zu einem oder mehreren zugeordneten Parametern als auch den Programmfluß von einem zum folgenden Instruktionscode - ohne Berücksichtigung von Sprüngen. So wird beispielsweise bei dem in Fig. 4 gezeigten Ablauf zunächst der Instruktionscode 0x13 bei der Speicheradresse 7 ausgewertet, dann die Mehrwort-Datenstruktur 34 mit dem Wert 0xABCD an den Adressen 5 und 6, dann der Instruktionscode 0x16 an der Adresse 4, dann dessen zugehöriger Parameter 0x12 an der Adresse 3, und so weiter.

In dem hier beschriebenen Ausführungsbeispiel werden die Mehrwort-Datenstrukturen 34, 36 wie in dem Verfahren von Fig. 3 durch native Prozessorbefehle 38, 40 gelesen, so daß die Zugriffsreihenfolge innerhalb einer Mehrwort-Datenstruktur 34, 36, wie durch den Prozessorkern 14 vorgegeben, in Richtung steigender Adressen verläuft. Mit anderen Worten verläuft die Zugriffsfolge innerhalb einer Mehrwort-Datenstruktur 34, 36 umgekehrt zu der oben erwähnten Richtung der Instruktionsausführung. Durch diesen Richtungswechsel schließen die für die Zugriffe auf die Mehrwort-Datenstrukturen 34, 36 verwendeten Basisadressen 42, 44 nicht unmittelbar an die Adressen der entsprechenden Instruktionscodes an, sondern sie sind von den Instruktionscodes durch die höherwertigen Bytes der Mehrwort-Datenstrukturen 34, 36 getrennt.

Als Beispiel für den gerade erwähnten Richtungswechsel wird in Fig. 4 nach der Auswertung des Instruktionscodes 0x13 an Adresse 7 die Adresse 5 als Basisadresse 42 verwendet, um durch den nativen Prozessorbefehl 38 auf die Mehrwort-Datenstruktur 34 zuzugreifen. Bei diesem Zugriff liest der Prozessorkern 14 zunächst das geringerwertige Byte 0xCD von Adresse 5 und dann das höherwertige Byte 0xAB von Adresse 6. Vor und nach der Ausführung des Prozessorbefehls 38 erfolgt jedoch der Interpretationsvorgang in Richtung fallender Speicheradressen.

Insgesamt wird durch das hier beschriebene Verfahren eine effiziente Interpretierung der im Speicher 16 befindlichen Daten 32 ermöglicht, wobei insbesondere native Mehrwort-Prozessorbefehle 38, 40 eingesetzt werden können. Während im vorliegenden Beispiel das Laden und die Interpretation von Daten 30, die ursprünglich in der *big-endian*-Wortordnung vorliegen, auf einer Plattform mit *little-endian*-Wortordnung beschrieben wurde, sind die erfindungsgemäßen Techniken auch im umgekehrten Fall entsprechend anwendbar.

## Patentansprüche

1. Verfahren zum Laden von Daten (30) in einen Speicher (16) eines tragbaren Datenträgers (10), bei dem:

   - der tragbare Datenträger (10) einen Prozessorkern (14) aufweist, der dazu eingerichtet ist, in einer vorgegebenen, nativen Wortordnung auf Datenwörter von Mehrwort-Datenstrukturen (34, 36) im Speicher (16) zuzugreifen (38, 40), und bei dem
   - die zu ladenden Daten (16) Mehrwort-Datenstrukturen (34, 36) enthalten, deren Wortordnung gegenüber der nativen Wortordnung des Prozessorkerns (14) umgekehrt ist,

**dadurch gekennzeichnet, daß**

- die Daten (30) unter Beibehaltung ihrer Reihenfolge aufsteigend bzw. absteigend in den Speicher (16) geschrieben werden, so daß die Wortordnung der im Speicher (16) abgelegten Mehrwort-Datenstrukturen (34,36) mit der nativen Wortordnung des Prozessorkerns (14) übereinstimmt.

**2.** Verfahren nach Anspruch 1, **dadurch gekennzeichnet, daß** die native Wortordnung des Prozessorkerns (14) eine *little-endian*-Wortordnung ist, und daß die Wortordnung der Mehrwort-Datenstrukturen (34, 36) in den zu ladenden Daten (30) eine *big-endian*-Wortordnung ist, in daß die Daten (30) in Richtung absteigender Adressen in den Speicher (16) geschrieben werden, so daß die Wortordnung der in den Speicher (16) geschriebenen Mehrwort-Datenstrukturen (34, 36) eine *little-endian*-Wortordnung ist.

**3.** Verfahren nach Anspruch 1 oder 2, **dadurch gekennzeichnet, daß** die Daten (30) Instruktionscodes aufweisen, die zur Interpretierung durch einen von dem Prozessorkern (14) ausgeführten Interpreter (28) des tragbaren Datenträgers (10) vorgesehen sind, und daß zumindest einigen der Instruktionscodes je mindestens eine Mehrwort-Datenstruktur (34, 36) als Parameter zugeordnet ist.

**4.** Verfahren zum Interpretieren von Daten (32), die in einem Speicher (16) eines tragbaren Datenträgers (10) vorliegen, durch einen Interpreter (28), der von einem Prozessorkern (14) des tragbaren Datenträgers (10) ausgeführt wird, wobei:

- die Daten (32) Instruktionscodes enthalten, die zur Interpretierung durch den Interpreter (28) vorgesehen sind,
- zumindest einigen der Instruktionscodes je mindestens eine Mehrwort-Datenstruktur (34, 36) als Parameter zugeordnet ist,
- der Prozessorkern (14) dazu eingerichtet ist, auf Grundlage einer Basisadresse (42, 44), die eine Mehrwort-Datenstruktur (34, 36) bezeichnet, in einer vorgegebenen, nativen Wortordnung auf die Datenwörter dieser Mehrwort-Datenstruktur zuzugreifen (38, 40),

**dadurch gekennzeichnet, daß**

- die Adresse jedes Instruktionscodes sich von jeder Basisadresse (42, 44), die zum Zugriff auf eine als Parameter des Instruktionscodes dienende Mehrwort-Datenstruktur (34, 36) verwendet wird, um mehr als die Wortanzahl des Instruktionscodes unterscheidet.

**5.** Verfahren nach Anspruch 4, **dadurch gekennzeichnet, daß** jeder Instruktionscode sich im Speicher (32) an einer höheren Adresse befindet als alle diesem Instruktionscode zugeordneten Parameter.

**6.** Verfahren nach Anspruch 4 oder Anspruch 5, **dadurch gekennzeichnet**, d a ß die native Wortordnung des Prozessorkerns (14) eine *little-endian*-Wortordnung ist, und daß die Wortordnung der im Speicher (16) vorliegenden Mehrwort-Datenstrukturen (34, 36) eine *little-endian*-Wortordnung ist, und daß die vorgesehene Richtung des Programmflusses von Instruktionscode zu Instruktionscode, ohne Berücksichtigung von Sprungbefehlen, von hohen zu niedrigen Speicheradressen erfolgt.

**7.** Verfahren nach einem der Ansprüche 3 bis 6, **dadurch gekennzeichnet**, d a ß bei den im Speicher (16) enthaltenen Daten (32) die vorgesehene Richtung des Programmflusses von Instruktionscode zu Instruktionscode, ohne Berücksichtigung von Sprungbefehlen, umgekehrt zu einer durch den Prozessorkern (14) vorgegebenen, nativen Zugriffsreihenfolge auf die einzelnen Datenwörter der als Parameter dienenden Mehrwort-Datenstrukturen (34, 36) ist.

**8.** Verfahren nach einem der Ansprüche 1 bis 7, **dadurch gekennzeichnet**, d a ß die Wortbreite des Prozessorkerns (14) und des Speichers (16) 8 Bit beträgt, und daß die Mehrwort-Datenstrukturen (34, 36) zumindest teilweise als Zwei-Wort-Datenstrukturen mit 16 Bit oder zumindest teilweise als Vier-Wort-Datenstrukturen mit 32 Bit vorliegen.

**9.** Verfahren nach einem der Ansprüche 1 bis 8, **dadurch gekennzeichnet**, d a ß die zu ladenden Daten (30) als *Java-Card*-CAP-Datei vorliegen, und/ oder daß der Interpreter (28) eine *Java Card Virtual Machine* ist.

**10.** Computerlesbarer Datenträger, der Programmbefehle aufweist, um einen Prozessorkern (14) eines tragbaren Datenträgers (10) zu veranlassen, ein Verfahren mit den Merkmalen eines der Ansprüche 1 bis 9 zu veranlassen.

**11.** Tragbarer Datenträger (10) mit einem Speicher (16) und einem Prozessorkern (14), der zur Ausführung eines Verfahrens mit den Merkmalen eines der Ansprüche 1 bis 9 eingerichtet ist.

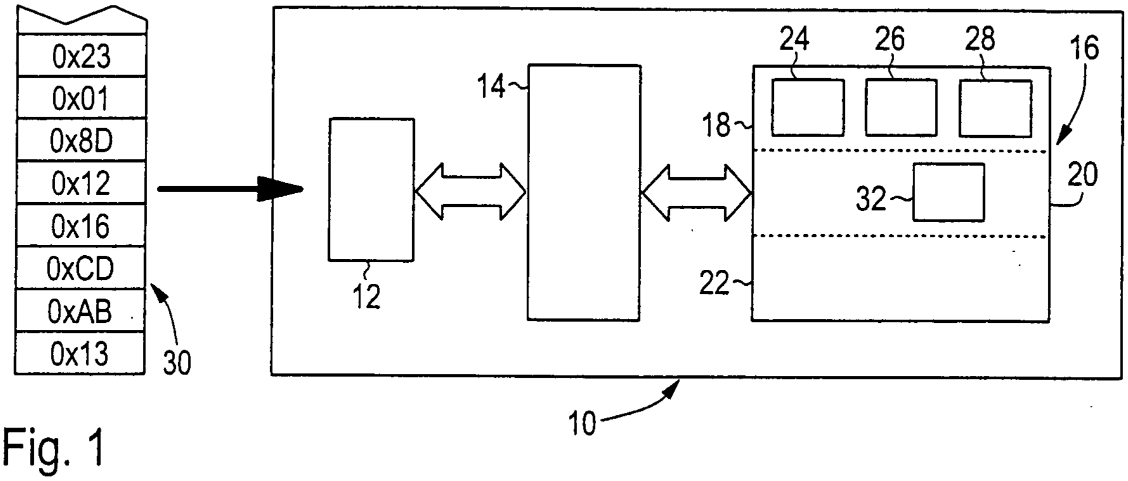


Fig. 1

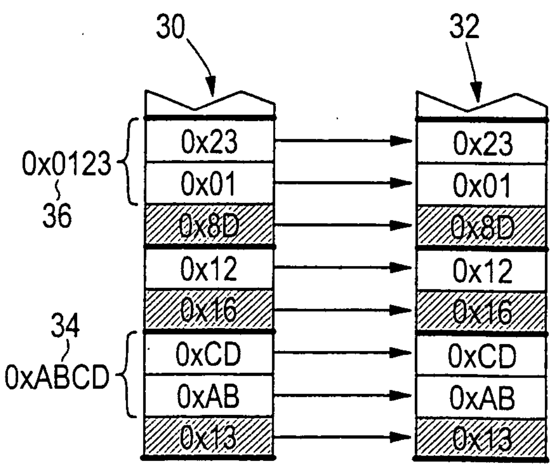


| ADR. | INHALT | ZUGRIFFS-FOLGE |
|---|---|---|
| 7 | INDEX 0x0123 | |
| 6 | | |
| 5 | INSTR.CODE | |
| 4 | INDEX 0x12 | |
| 3 | INSTR.CODE | |
| 2 | KONSTANTE 0xABCD | |
| 1 | | |
| 0 | INSTR.CODE | |

Fig. 2
(Stand der Technik)

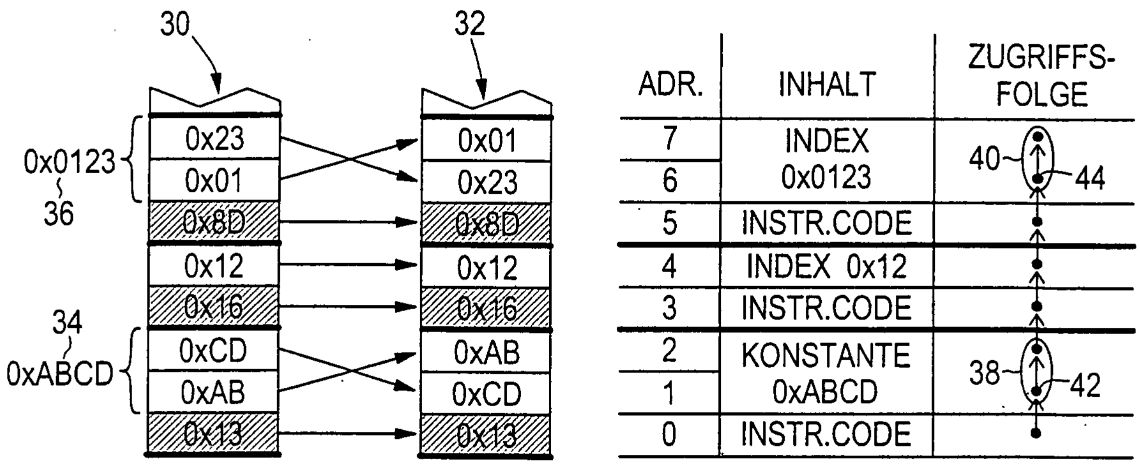


Fig. 3
(Stand der Technik)

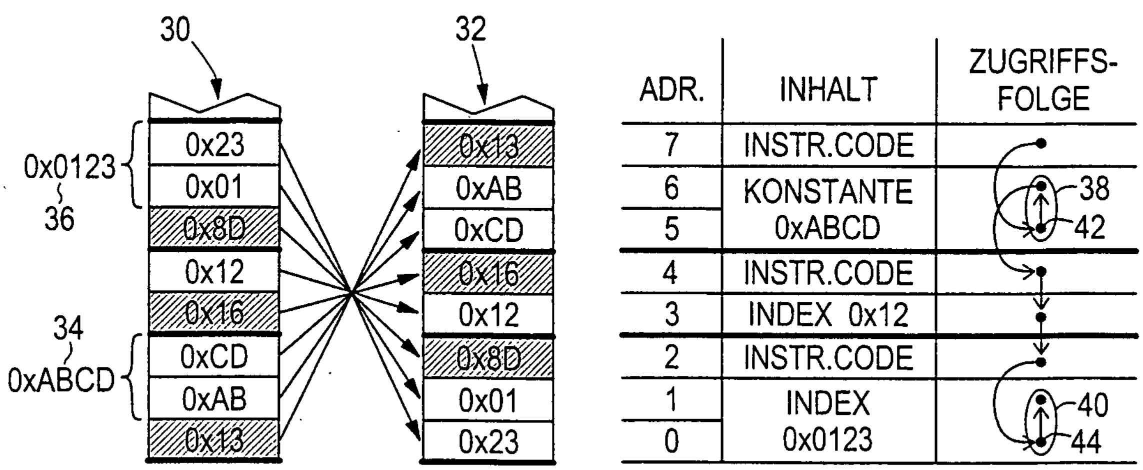


Fig. 4